# EUROPEAN PATENT SPECIFICATION

(11) **EP 4 106 509 B1**
(45) Date of publication and mention of the grant of the patent: **04.09.2024**
(21) Application number: 21707915.1
(22) Date of filing: 19.02.2021
(51) Int. Cl.: A01G 7/00

(54) **MONITORING OF A PLANT CONDITION**
ÜBERWACHUNG EINES PFLANZEZUSTANDS
SURVEILLANCE DE L'ÉTAT D'UNE PLANTE

(30) Priority: 19.02.2020 EP 20158301
(43) Date of publication of application: 28.12.2022
(73) Proprietor: Katholieke Universiteit Leuven, 3000 Leuven (BE)
(72) Inventor: VAN DE POEL, Bram, 2018 Antwerpen (BE); GELDHOF, Batist, 1880 Ramsdonk (BE)
(74) Representative: Beck, Michaël Andries T.
(86) International application number: PCT/EP2021/054175
(87) International publication number: WO 2021/165476

(56) References cited:
- JP-A- 2020 003 900
- JP-A- H10 323 126
- US-B1- 6 870 376

## Description

### Background and Summary

### BACKGROUND OF THE INVENTION

### A. Field of the Invention

Present invention concerns a method of monitoring the condition of a plant using an horticulture appliance for real-time monitoring the aboveground movement and responses of plant organs to biotic and abiotic stress conditions, so to detect and mitigate their adverse effects on crop growth and productivity. It further concerns methods to detect and mitigate their adverse effects on crop growth and productivity by the horticulture appliance without camera systems. JP 2020 003900 A discloses a tree watching system. JP H10 323126 A and US 6 870 376 B1 disclose sensors positioned on a leaf and a petiole respectively

### B. Description of the Related Art

The advent of image analysis and computer vision has changed the phenotyping landscape considerably, making it a standard technique for studying plant development and movements (6). Many of the current imaging systems are however often static and are not always easily compatible with high-throughput phenotyping (necessity of multiple camera systems or conveyer belts). Both fixed and moving imaging platforms have been used to assess entire plant responses or plant growth based on canopy cover or side view images. For research purposes, for example, fixed camera systems can be easily applied for small rosette plants such as *Arabidopsis* (6, 7), while this becomes more challenging for larger non-rosette plants. For the latter, multiple cameras need to be deployed to image a plant from different sides, or either the plant or the camera should be displaced during the measurement. This kind of system also comes with the need for a larger spatial configuration to capture entire plant responses. In contrast, the movement of plants themselves on conveyer belts or rotating platforms in high-throughput phenotyping facilities might introduce a certain bias to the measurement of naturally occurring plant movements. Furthermore, imaging systems require optimal plant positioning towards the camera and might have to deal with unwanted occlusions or changing light conditions.

For angle determination, the relative position of the camera perpendicular to the leaf axis is crucial for correct measurements. This impedes the use of cameras for recording multiple leaves/stems of the same plant.

There is thus a need in the art to overcome deficiencies and defects identified herein. There is a need in the art to reliably measure plant and/or plant organ movements and changes in morphology in real-time. There is also a need in the art to provide a real-time warning indication about the plant conditions by direct in situ sensing. And there is also a particular need in the art for a monitoring horticulture appliance that is a readily adaptable monitoring appliance capable of high degree of sensing accuracy, yet impervious to or otherwise able to withstand the environmental conditions, being exposed to ambient conditions and not being hindered by the visual conditions. Moreover, there is also a particular need in the art for a monitoring and control horticulture appliance that is readily adaptable monitoring and control appliance capable of high degree of sensing accuracy, yet impervious to or otherwise able to withstand the environmental conditions, being exposed to ambient conditions and not being hindered by the visual conditions.

The present invention solves these needs. It concerns a method that is able to monitor plant and/or plant organ movements in real-time. It can operate stand-alone. Moreover, it does not rely on camera technology or other imaging techniques, but uses small scale digital sensor technology. The uses a sensor that is foreseen of an affixing, which means it can be easily attached to a plant or plant organ to capture dynamic plant movements. The sensor module can be integrated in large plant monitoring setups and has wireless capabilities (e.g. LoRa/LoRaWAN), enabling the use in remote locations. The system determines the orientation of its sensors to assess movements over time and is able to process the digital data of multiple sensor modules in real-time. These data are readily available for visualization of continuous plant and/or plant organ movements. The system can be applied for monitoring plant development, stress responses and adaptation responses to internal and external stimuli.

### SUMMARY OF THE INVENTION

The present invention solves the problems of the related art of monitoring a plant, its growth, stress responses and adaptation responses to internal and external stimuli by the method according to claim 1.

In accordance with the purpose of the invention, as embodied and broadly described herein, the method uses a horticulture appliance, comprising an attaching, fastening or affixing means (1) suitable for mounting to a plant petiole, stem or organ and comprising a sensing device which comprises a sensor and a communicator operatively connected to a processor. According to the invention, the horticulture appliance comprises an attaching, fastening or affixing means (1) suitable for mounting to a plant petiole that extends from a plant stem and comprising a sensing device which comprises a motion sensor and a communicator operatively connected to a processor In another aspect of the invention this horticulture appliance further comprising an energy source operatively connected to the processor.

In still another aspect of the invention, this horticulture appliance further comprising an actuator. Such actuator can be operationally connected to an apparatus that modulates the plant or the plant environment.

In still another aspect of the invention, this sensing device of present invention is suitable to measure changes in leaf or plant organ angle or it is a sensor for motion detection of the plant petiole or organ.

Some of the techniques described above may be embodied as that the communicator is a low-energy wireless communicator. The present invention also provides that the communicator can be engaged with the processor via a wired connection.

In an advantageous embodiment, the device according to the present invention further comprises the communication device or communicator for handling data transfer and comprises a processing unit for preprocessing and visualization of the data.

In an advantageous embodiment, the device according to the present invention comprises a sensing device which comprises a digital inclinometer and/or an inertial measurement unit (IMU) for defining the orientation of the sensing device, for instance the sensing device comprises a digital inclinometer and/or an inertial measurement unit (IMU) for defining the orientation of the sensing device and when operational the plant part to which it is attached.

In yet an advantageous embodiment, the device according to the present invention comprises a communication device or communicator that is adapted to integrate the data of one or multiple sensors and to convert it into data packets that can be stored locally or sent wirelessly via protocols such as LiFi, Wifi, Bluetooth, LoRa or LoRaWAN to the processing unit. For instance when operational the processor receives data directly from the sensor via the communicator or through a gateway.

In a practical embodiment, the device according to the present invention comprises the processing device and acts as a data concentrator, storing data locally or on a data server, and is capable of handling preliminary data analysis for visualizing plant movements.

For the purposes of the present invention the attaching, fastening or affixing element is particularly adapted for mounting the device according to the present invention at the plant, preferably at a plant petiole so that the sensing device is engaged with stem growth, leaf angle and leaf orientation, which can be sensed as an indication of the plant's condition. For instance such arrangement can be the attaching, fastening or affixing means comprising a material that is depressible material securing to the plant petiole, the attaching, fastening or affixing means is closed as a sleeve surrounding part of the plant petiole, the attaching, fastening or affixing comprises a notch or groove that fits with a plant petiole or the attaching, fastening or affixing means is adapted to secure the sensing device under a plant petiole

With respect to the mounting on the plant petiole, it is noted that it is advantageous if these attaching, fastening or affixing elements at least at the contact site with the plant are of a material suitable to contact the plant petiole; for instance a biocompatible resin such as a polyetheretherketone resin or other non-degradable materials that may be used include TEFLON, i.e. poly(tetra-fluoroethylene), and DACRON, a polyester material of poly(ethylene terephthalate). For adhering a biocompatible glue of the sensing device to the plant petiole a biocompatible glue based one or more non-toxic mono-, di-, tri-, oligo- or polysaccharides can be used.

With respect to protecting the sensing device from the environment for instance against humidity or light radiation, it is noted that it is advantageous if the sensing device is encapsulated or contained in a sealing element.

In a practical embodiment, the horticulture appliance according to the present invention comprises in the sensing device a memory which is operatively connected to the sensor to store monitored conditions obtained by the sensor.

In yet another practical embodiment, the horticulture appliance according to the present invention comprises in the sensing device that the communicator comprises a Bluetooth^{™} low-energy (BLE) protocol radio module.

An example of an energy source to energize the processor is a battery or the energy source can be of the group consisting of a photovoltaic cell, an inductive charger and a long-range wireless charger.

A further embodiment of the invention, concerns a method of monitoring the condition of a plant using the horticulture appliance of present invention to analyze in real-time changes in plant morphology.

This invention advantageously comprises that the horticulture appliance mounted to a plant petiole [4] that extends from a plant stem [5] hereby motion detecting by the sensing device [1] of the plant petiole. Or some of the techniques described above may be embodied as measuring by the sensing device [1] changes in leaf or plant organ angle or as electronically sensing the inclination angles alongside one or two axes of the plant part(s) in time.

In another aspect, the horticulture appliance comprises a digital inclinometer and/or an inertial measurement unit (IMU) sensor for defining the orientation of the sensing device and when operational the plant part to which it is attached and a communicator operatively connected to a processor. In yet another aspect, the horticulture appliance comprises a sensing device [1] which comprises a motion sensor and a communicator operatively connected to a processor. In yet another aspect, the present invention provides that the horticulture appliance further comprising an energy source operatively connected to the processor. In yet another aspect, the present invention provides that the horticulture appliance comprising an actuator.

Some of the techniques described above may be embodied as that the actuator is operationally connected to an apparatus that modulates the plant environment.

Some of the techniques described above may be embodied as that whereby the communicator is a low-energy wireless communicator or that whereby the communicator is wired [7] connected with the processor. Such communicator can be adapted to integrate the data of one or multiple sensors and to convert it into data packets that can be stored locally or sent wirelessly via protocols such as Wifi, LiFi, Bluetooth, LoRa or LoRaWAN to the processing unit.

Some of the techniques described above may be embodied as that the communicator for handling data transfer comprises a processing unit for pre-processing and visualization of the data. When operational the processor can receive data directly from the sensing device [1] via the communicator or through a gateway

Some of the techniques described above may be embodied as that sensing device comprises a digital inclinometer and/or an inertial measurement unit (IMU) for defining the orientation of the sensing device.

In an advantageous embodiment, the method according to the present invention further comprises that the attaching, fastening or affixing means comprises a material which is a depressible material securing to the plant or the attaching, fastening or affixing means is closed as a sleeve surrounding part of the plant organ or the attaching, fastening or affixing comprises a notch or groove that fits with a plant or plant organ or the attaching, fastening or affixing means is adapted to secure the sensing device under a plant organ or the the attaching, fastening or affixing means is of a material suitable to contact the plant organ.

Thus, in certain embodiments of the present invention, a memory is operatively connected to the sensor to store monitored conditions obtained by the sensor and/or the communicator comprises a Bluetooth^{™} low-energy (BLE) protocol radio module. And/or the energy source is an appliance of the group consisting of a battery, a photovoltaic cell, an inductive charger and a long-range wireless charger and/or the processor acts as a data concentrator, storing data locally or on a data server, and is capable of handling preliminary data analysis for visualizing plant movements.

The method of present invention is particularly suitable to analyse in real-time changes in plant morphology, to electronically sense the inclination angles alongside one or two axes of the plant part(s) in time or to measure plant and/or plant organ movements and changes in morphology in real-time.

An advantageous aspect of present invention is that all of the steps of measuring changes in leaf angle and plant organ movement, storing the detected condition and transmitting to the processor of the stored condition data can be done in real-time or that all of the steps of measuring changes in leaf angle and plant organ movement, storing the detected condition and transmitting to the processor of the stored condition data, processing these data and activation of an actuator to change the plant's condition or to change the plant's environment can be done in real-time. This is very useful for a method or system as in present that is capable of monitoring a plant, its growth, stress responses and adaptation responses to internal and external stimuli.

According to the present invention there is thus provided a method of non-invasive monitoring of a plants' function with the methods as described above. The invented method can for instance distinguish between normal conditions and during low oxygen stress in the rooting zone, as for instance has been demonstrated on the leaf petiole angle change of tomato plants, bell pepper, red bean and potato plants. It also allows to denotes in situ the duration of the oxygen stress and the recovery. The invented method can for instance also distinguish between normal conditions and plants' function during drought stress, as for instance has been demonstrated on the leaf petiole angle change of tomato plants. It also allows to denotes in situ the duration of the oxygen stress and the recovery. Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the claims will become apparent to those skilled in the art from this detailed description. It is to be understood that both the foregoing general description and the following detailed description are exemplary and explanatory only and are not restrictive of the invention, as claimed.

### Detailed Description

### DETAILED DESCRIPTION OF EMBODIMENTS OF THE INVENTION

The following detailed description of the invention refers to the accompanying drawings. The same reference numbers in different drawings identify the same or similar elements. Also, the following detailed description does not limit the invention. Instead, the scope of the invention is defined by the appended claims.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to the devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

In the description provided herein, numerous specific details are set forth. However, it is understood that embodiments of the invention may be practiced without these specific details. In other instances, well-known methods, structures and techniques have not been shown in detail in order not to obscure an understanding of this description.

Other embodiments of the invention will be apparent to those skilled in the art from consideration of the specification and practice of the invention disclosed herein.

It is intended that the specification and examples be considered as exemplary only.

Each of the claims set out a particular embodiment of the invention.

The following terms are provided solely to aid in the understanding of the invention.

For the past few years, plant phenotyping has gained more attention and the methods and applications in the field have evolved drastically. Many of the current methodologies for inferring traits about plant morphology now rely on image and computer vision techniques. Examples of these traits are stem growth, leaf angle and leaf orientation, which have been widely used as inputs for models for estimating plant photosynthesis and dry mass production. The dynamic changes of these variables in response to internal and external factors have proved to account for significant effects on plant productivity and crop yield (1).

Besides plant growth and development, plant and plant organs also move in response to external stimuli such as changes in light quantity, direction and quality (phototropism, photomorphogenesis, heliotropism, shade-avoidance response), touch or wind (thigmomorphogenesis), gravity (gravitropism), heat, cold, drought, salinity, hypoxic conditions and pathogens.

By monitoring the aboveground responses of plant organs to biotic and abiotic stress conditions, it is possible to detect and mitigate their adverse effects on crop growth and productivity.

Plant growth and development as well as plant movements and changes in morphology have long been assessed by discrete methods incapable of integrating continuous data. Discrete measurements of variables such as plant height, growth rate and leaf angle have been performed with analog instruments such as protractors and rulers (2). In the past, also indirect methods have been proposed to extract geometrical features of plants. For example, leaf angle has been derived from the linear displacement along the vertical axis (3) or from traces or projections drawn from the petiole itself (3, 4). More recently, these analog techniques have been translated into a digital alternative, using sensors present in mobile phones for measuring leaf angles (5). Depending on the procedure, these data result from discrete measurements in time and often include only 1 dimension. Furthermore, the data derived from these methods can be interpreted in several ways as technical and human errors are often high. In addition, repeated contact with the plant can negatively impact its growth and development and introduce unwanted variations in the variable of interest.

The advent of image analysis and computer vision has changed the phenotyping landscape considerably, making it a standard technique for studying plant development and movements (6). Many of the current imaging systems are however often static and are not always easily compatible with high-throughput phenotyping (necessity of multiple camera systems or conveyer belts). Both fixed and moving imaging platforms have been used to assess entire plant responses or plant growth based on canopy cover or side view images. For research purposes, for example, fixed camera systems can be easily applied for small rosette plants such as *Arabidopsis* (6, 7), while this becomes more challenging for larger non-rosette plants. For the latter, multiple cameras need to be deployed to image a plant from different sides, or either the plant or the camera should be displaced during the measurement. This kind of system also comes with the need for a larger spatial configuration to capture entire plant responses. In contrast, the movement of plants themselves on conveyer belts or rotating platforms in high-throughput phenotyping facilities might introduce a certain bias to the measurement of naturally occurring plant movements. Furthermore, imaging systems require optimal plant positioning towards the camera and might have to deal with unwanted occlusions or changing light conditions. For angle determination, the relative position of the camera perpendicular to the leaf axis is crucial for correct measurements. This impedes the use of cameras for recording multiple leaves/stems of the same plant.

Downstream of the image acquisition pipeline, storing and processing of a large number of high resolution images in real-time applications requires long computing times and more complex algorithms or specialized software packages. This is also the case for post processing of images for plant organ recognition and characterization, as it might still require manual optimization for individual images.

New emerging laser scanning techniques for plant morphology phenotyping accurately determine the geometry of an entire plant at high resolution. Several of these methods have been applied for the characterization of small *Arabidopsis* plants (9), intermediate sized corn plants (*Zea mays)* (10), large birch (*Betula pendula*) trees (11) and even entire tomato (*Solanum lycopersicum*) canopies (12). These laser scanning techniques make use of the LiDAR (Light Detection And Ranging) principle and yield dense point clouds representing the surface of the reflecting object. The limiting and structural conditions as defined above for the 2D imaging systems hold for these 3D laser scanning techniques as well. Positioning of plants and plant organs of interest towards the laser scanning instrument determines the outcome of the procedure and multiple scans in space and time may be necessary to obtain valuable data. The workflow to get to interpretable results is often cumbersome and processing of large datasets might decrease the overall efficiency of this technique for assessing plant movements in real-time.

The above imaging and laser scanning methodologies have been successfully applied in open field conditions, but require large and static platforms such as phenotowers (13) or have to be integrated in moving platforms such as tractors (14), field scale scanning devices (Fieldscan, Phenospex) or aerial platforms (15).

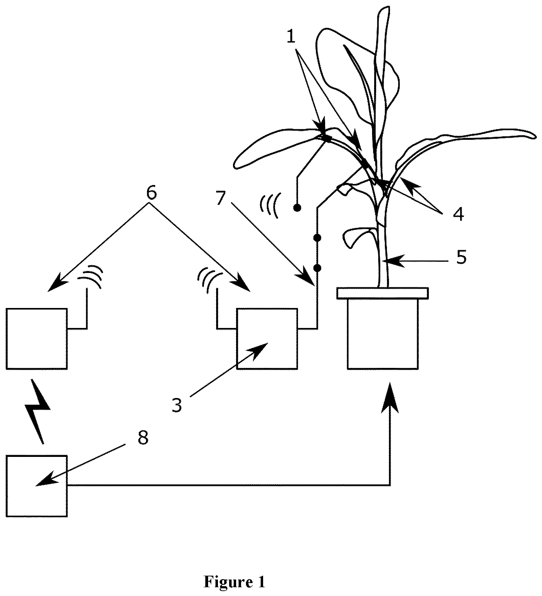

The invention provides a new way to dynamically measure plant stature and more specifically determine movements and inclination angles of plant organs in real-time. Individual light-weight sensors can be attached to the plant organ of interest with a clip, brace, glue or similar. By fixing the position of each sensor on the plant, the probability of measurement interference is reduced, while the reproducibility increases (Figure 1). The core part of the measurement system itself comprises of a digital sensor that captures its orientation towards the earth's field of gravity. Sensors suitable for the current invention are micro-electromechanical system sensors (MEMS) such as digital inclinometer sensors (dual and triple axis inclinometer series of Murata ; SCL3300) or inertial measurement unit sensors (IMU) such as the MPU6050 (InvenSense). These IMU's combine gyroscope data (angular velocity) together with accelerometer (linear acceleration) measurements to improve accuracy and reduce drift effects. Both of the outputs are combined via sensor fusion algorithms. Multiple of these sensors can be equipped simultaneously to monitor multiple plant organs without the need to reconfigure the entire system. This principle provides a stand-alone solution for plant movement monitoring, independent of a large external setup such as those used in most imaging systems.

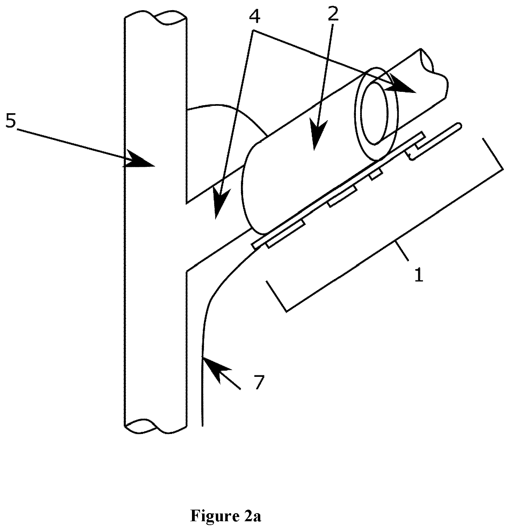

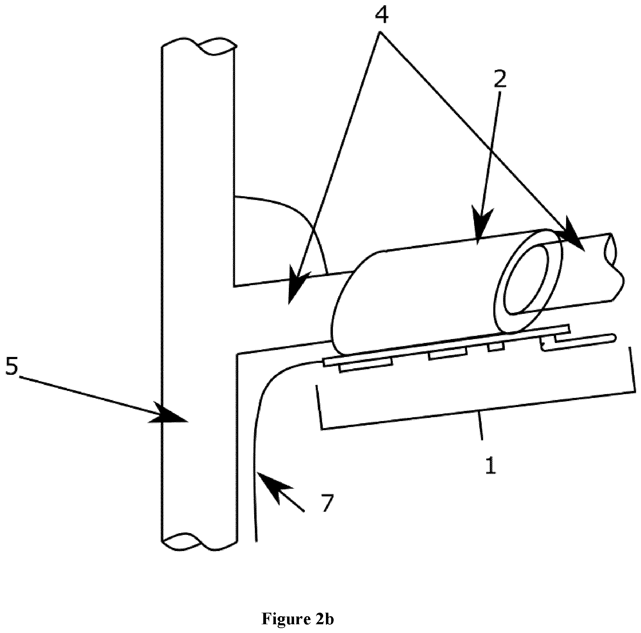

The sensors can be individually configured or connected to a module that gathers data at variable time intervals and can store it locally or send it to a remote processing unit. The data collection, transfer and processing flow-chart is presented in Figure 2. The data packets can be sent from individual sensor nodes, consisting of a microcontroller unit, via wireless protocols such as WiFi, LiFi, Bluetooth, LoRa (Long Range), etc. and stored on a local server, or made available through network servers e.g. LoRaWAN (Long Range Wide Area Network). As a result, the system architecture supports integration in existing networks and communication over longer distances while being less prone to obstacles in the vicinity of the sensor node. This increases the capabilities of its use in growth chambers, greenhouses or open fields.

The data format is numeric (no digital images), which eases the compilation, interpretation and processing after the data has been transferred. Depending on the communication protocol used for this transfer, data can be stored and processed in a stand-alone microcontroller or a similar device or made available through a network connection. Not only does this allow to access data remotely, it also supports its use in on-line warning systems (e.g. plant stress detection). In addition, the invention includes an algorithm for restructuring and visualizing data derived from the sensory system to represent plant and plant organ movements in space and time. In combination with existing location tracking technologies a network of these sensors can also be easily integrated in a variety of crop production systems, providing a user-friendly warning system.

Plants and plant organs, such as leaves and flowers, respond dynamically to changes in their environment. These changes can be gradual and reoccurring, and act as external stimuli to regulate certain developmental processes. One of the most striking and visible responses of plants are active changes in stature by organ movements. Depending on the direction of a stimulus and the subsequent plant response, movements are called nastic movements (independent of direction) or tropisms (directional). Entrainment of plants to the day-night cycle, for example, leads to so-called nyctinastic nutations or sleep movements, expressed as a daily oscillatory motion in stems, leaves and other organs. Disruption of the regular growing conditions can evoke an adaptive reorientation of these organs. Heat, low light or flooding trigger an upwards movement in leaves of species such as Arabidopsis thaliana, which is called hyponasty. The opposite response, epinasty, is one of the most characteristic responses to root waterlogging in species such as tomato. Depending on the nature and the magnitude of the stress condition, organ movements are often one of the earliest visible responses to multiple stresses. Monitoring the plant condition through measurements of, for example, leaf orientation can improve early stress detection, and contribute to precision farming and environmental control. In addition, leaf orientation and plant architecture are valuable target traits in breeding programs of certain species, such as wheat and maize.

### EXAMPLES

### Methods

### Experimental

Diurnal and stress-induced leaf movements were assessed in different species and for three major stress conditions in a greenhouse with automated climate control and fertigation supply. The experiments were conducted under controlled conditions of 18 °C and 70 % RH during the day and 65 % RH during the night and plants received extra assimilation light from 6 AM to 10 PM (SON-T) if solar intensities dropped below 250 Wm-2.

Tomato (Solanum lycopersicum cv. Ailsa Craig) plants were grown in rockwool blocks, and given a low oxygen stress and a drought stress treatment after reaching the eighth leaf stage. The waterlogging treatment was conducted by flooding individual containers with pond water and lasted for three days, after which the plants were reoxygenated. For the drought treatment, plants were subjected to a three step drying sequence. Initially, plants received water in the morning and the evening for four days (R0-1), followed by only one water gift in the morning (R2). After another three days, plants received no fertigation anymore (R3).

Bell pepper (Capsicum annuum cv. Maduro) plants were grown on rockwool in the greenhouse until approximately the seventh leaf stage, after which they received a waterlogging treatment of three days followed by a reoxygenation of two days.

Potato (Solanum tuberosum) plants were grown from cuttings in a growth room (21 °C and 65 % RH) until the 13th leaf stage. Afterwards, they were transferred to the greenhouse where they received fertigation in the morning and at midday. Subsequently, the potato plants received a waterlogging treatment for three days followed by a reoxygenation of three days.

Common bean (Phaseolus vulgaris) plants were grown in soil in the greenhouse until the 5th leaf stage and subsequently exposed to a waterlogging treatment of 5 days by flooding the root system followed by reoxygenation for 5 days, or a drought treatment of 10 days by withholding fertigation.

### Oxygen consumption

During each of the waterlogging experiments, the dissolved oxygen level was measured with optical oxygen sensor probes (Firesting O2) in the container for at least two replicates per species to ensure hypoxic conditions were reached.

### Data analysis and statistics

Post-processing and visualization of the sensor data was performed in R (R Core Team), together with the analysis of angular features and plant transpiration.

The time series analysis consisted of two main procedures. Data were first interpolated to a common timeframe and afterwards outliers were removed and the time series were decomposed using STL decomposition (R packages tsclean and stl). Confidence intervals were determined from the Student t Distribution, taking into account the actual number of replicates at each time point. Figures were produced using the package ggplot2 (Wickham, 2016).

### Findings

Besides their daily nutational movements (nyctinastic rhythms), leaves of horticultural important species such as tomato, potato, bell pepper, bean and others exert a quick response to abiotic stress conditions such as root hypoxia or drought. In contrast to the stable and relatively consistent daily oscillations (nyctinastic rhythms), this stress response is unidirectional and downwards oriented.

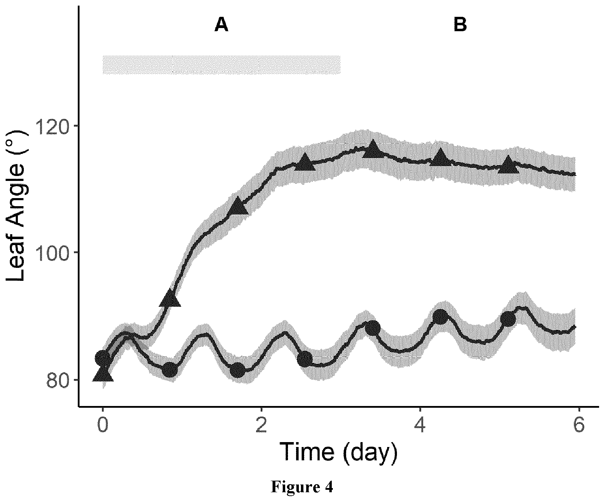

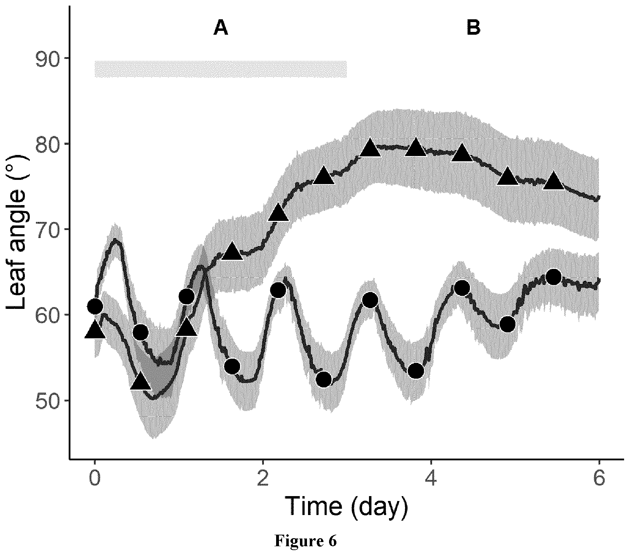

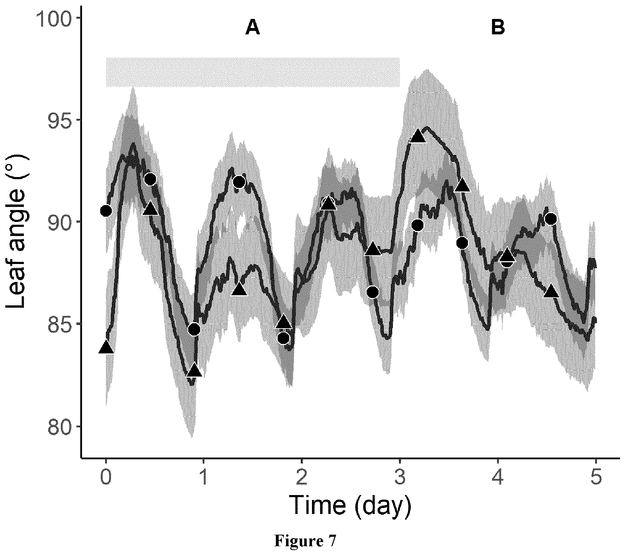

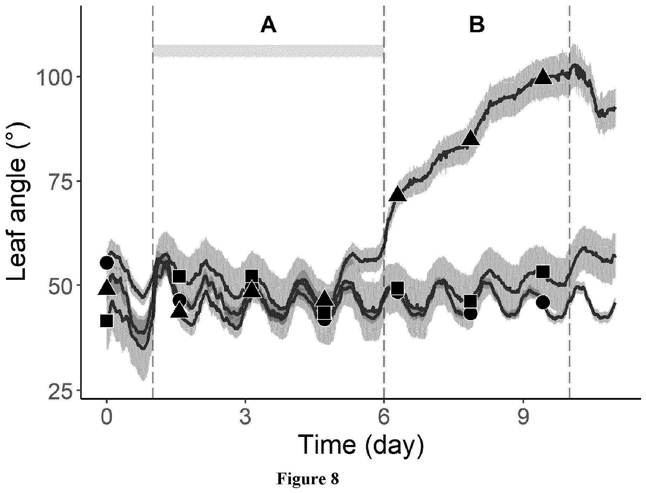

Figure 4 depicts the average movement of developmentally similar leaves of tomato plants (Solanum lycopersicum cv. Ailsa Craig) of the same age under normal and low oxygen stress conditions. The average leaf angle of plants that were grown in control conditions, i.e. with regular fertigation solution, shows nyctinastic rhythms and fluctuates around an equilibrium of 85°. Leaves of plants that were subjected to a three day period of root hypoxia bended down until reaching an average value 40 % higher than the initial state, and also, at least partially, lost their daily nutational rhythm. A similar, but weaker, response can be observed for potato (Solanum tubersomum) (Figure 6). In bell pepper (Capsicum annuum cv. Maduro), oxygen stress in the rooting zone and the subsequent reoxygenation mainly affect the amplitude of the daily nutation (Figure 7). For beans (Phaseolus vulgaris), the initial response to waterlogging stress is more gradual and these plants retain their circadian rhythm (Figure 8). However, short before and even more after reoxygenation, the rate of angular change increases drastically due to wilting observed in bean.

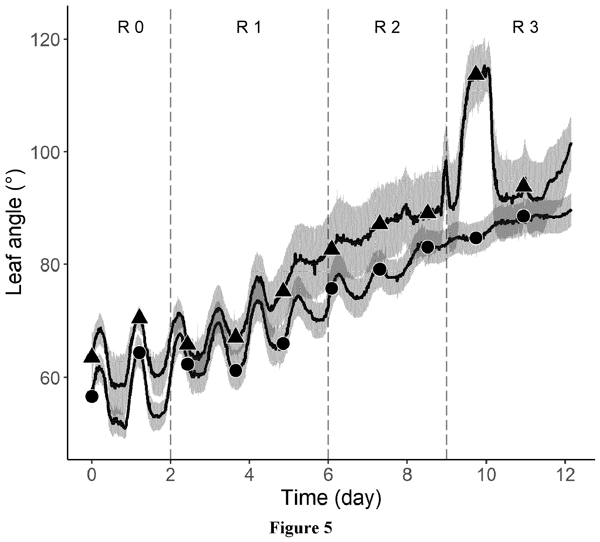

During a drought stress treatment, tomato leaf movements depend on the degree of water deficit (Figure 5). Initially, the circadian rhythms dampen (R0-R2), followed by a sudden but temporary downwards movement during complete drought (R3). In bean, the response to drought is confined to a gradual downwards movement and a disturbance of the nyctinastic rhythm, as the water deficit progresses (Figure 8).

It is clear from our data that different types of plants and different types of abiotic stress trigger specific plant responses, including alterations of morphological features, such as leaf orientation and changes in normal nyctinastic movements.

### Drawing Description

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a schematic view of the plant condition monitoring appliance. Movement sensors are attached to the petiole or organ [4] that extends from a plant stem [5] to measure changes in leaf angle. The sensor module [1] is attached to the petiole with an affixing means [2], and is connected to the communication [3] and processing unit [3, 6]. This figure shows both the options of a wired [7] or a wireless connection. The processing unit [3, 6] can trigger an actuator [8] to modify the environmental conditions and ultimately the plant condition.
FIG. 2 is a schematic view showing a movement sensor attached to the petiole [4] that extends from a plant stem [5] to measure changes in leaf angle. The sensor module [1] is attached to the petiole with an affixing means [2], This figure shows the option of a clip and is connected to the communication and processing unit [3]. This figure shows the option of a wired [7] connection. The angle between the petiole [4] and the plant stem [5] can change indicating a condition of the plant (Fig 2a & Fig 2b).

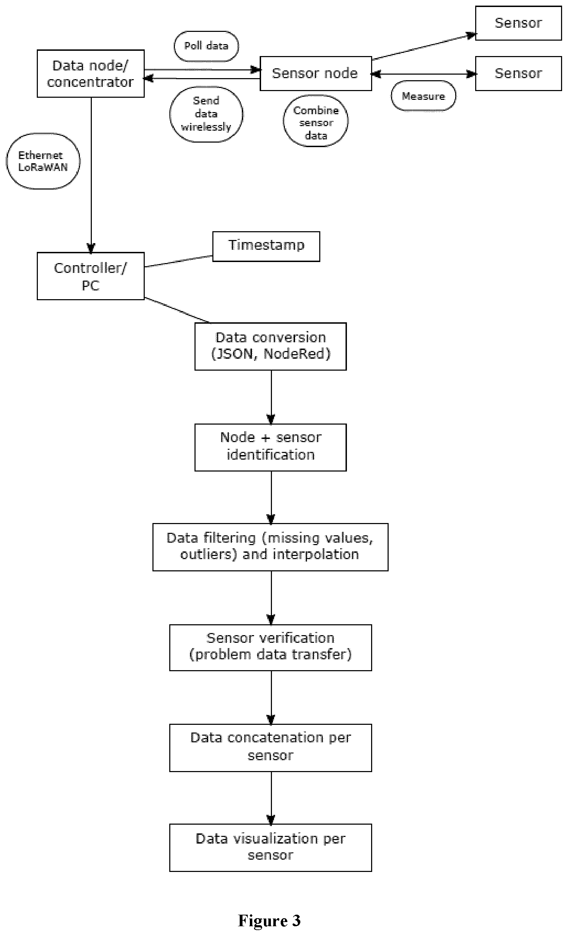

FIG. 3 is a flow-chart presenting the sensor data acquisition, transfer and analysis of the communication and processing unit.
FIG. 4 is a graphic that demonstrates the leaf petiole angle change of tomato plants in normal conditions and during low oxygen stress in the rooting zone.
   Circle (•) displays the normal conditions visualized the nyctinastic movement, and triangle (▲) displays the epinastic movement towards low oxygen stress in the rooting zone. A denotes the duration of the oxygen stress, B is stress recovery when oxygen is resupplied.
FIG. 5 is a graphic that demonstrates the leaf petiole angle change of tomato plants in normal conditions and during drought stress.
   Circle (•) displays the normal conditions visualized the nyctinastic movement, and triangle (▲) displays the drought stress demonstrating nyctinastic rhythms are gradually lost during R1-R2, and a strong petiole movement is observed in R3. R0 to R3 denote increased drought stress condition.
FIG. 6 is a graphic that demonstrates the leaf petiole angle change of potato plants in normal conditions and during low oxygen stress in the rooting zone.
   Circle (•) displays the normal conditions visualized the nyctinastic movement, and triangle (▲) displays the epinastic movement towards low oxygen stress in the rooting zone. A denotes the duration of the oxygen stress, B is stress recovery when oxygen is resupplied.
FIG. 7 is a graphic that demonstrates the leaf petiole angle change of bell pepper plants in normal conditions and during low oxygen stress in the rooting zone.
   Circle (•) displays the normal conditions visualized the nyctinastic movement and triangle (▲) displays that nyctinastic rhythms are gradually lost during low oxygen stress in the rooting zone. A denotes the duration of the oxygen stress, B is stress recovery when oxygen is resupplied.
FIG. 8 is a graphic that demonstrates the leaf petiole angle change of bean plants in normal conditions, during drought stress and during low oxygen stress in the rooting zone.
   Circle (•) displays the normal conditions visualized the nyctinastic movement, square (▪) display that nyctinastic rhythms are gradually lost during drought stress, and triangle (▲) display the epinastic movement towards low oxygen stress in the rooting zone respectively. A denotes the duration of the oxygen stress, B is stress recovery when oxygen is resupplied. Drought stress was applied during A and B together.

### References to this application

**[1].** Dueck, T.A., Van Dijk, C.J., Grashoff, C., Groenwold, J., Schapendonk, A.H.C.M. and Tonneijck, A.E.G. (2003). Response of potato to discontinuous exposures of atmospheric ethylene: Results of a long-term experiment in open-top chambers and crop growth modelling. Atmospheric Environment, 37, 1645-1654.
**[2].** Sarlikioti, V., De Visser, P.H.B. and Marcelis, L.F.M. (2011). Exploring the spatial distribution of light interception and photosynthesis of canopies by means of a functionalstructural plant model. Annals of Botany, 107, 875-883.
**[3].** Jackson, M.B. and Campbell, D.J. (1975). Movement of ethylene from roots to shoots, a factor in response of tomato plants to waterlogged soil conditions. New Phytologist, 74, 397-406.
**[4].** Kazemi, S. and Kefford, N.P. (1974). Apical correlative effects in leaf epinasty of tomato. Plant physiology, 54, 512-519.
**[5].** Escribano-Rocafort, A.G., Ventre-Lespiaucq, A.B., Granado-Yela, C., López-Pintor, A., Delgado, J.A., Muñoz, V., et al. (2014). Simplifying data acquisition in plant canopies- Measurements of leaf angles with a cell phone. Methods in Ecology and Evolution, 5, 132-140.
**[6].** Smeets, M.E., Voesenek, L.A.C.J., Peeters, A.J.M., Benschop, J.J., Millenaar, F.F. and van Zanten, M. (2006). Abscisic Acid Antagonizes Ethylene-Induced Hyponastic Growth in Arabidopsis. Plant Physiology, 143, 1013-1023.
**[7].** van Zanten, M., Ritsema, T., Polko, J.K., Leon-Reyes, A., Voesenek, L.A.C.J., Millenaar, F.F., et al. (2012). Modulation of ethylene- and heat-controlled hyponastic leaf movement in Arabidopsis thaliana by the plant defence hormones jasmonate and salicylate. Planta, 235, 677-685.
**[8].** Leather, G.R., Forrence, L.E. and Air, P. (1972). Increased Ethylene Production during Clinostat Experiments May Cause Leaf Epinasty. Plant physiology, 49, 183-186.
**[9].** Dornbusch, T., Michaud, O., Xenarios, I. and Fankhauser, C. (2014). Differentially Phased Leaf Growth and Movements in Arabidopsis Depend on Coordinated Circadian and Light Regulation. The Plant Cell, 26, 3911-3921.
**[10].** Su, W., Zhu, D., Huang, J. and Guo, H. (2018). Estimation of the vertical leaf area profile of corn (Zea mays) plants using terrestrial laser scanning (TLS). Computers and Electronics in Agriculture, 150, 5-13.
**[11].** Wieser, M., Puttonen, E., Mandlburger, G., Zlinszky, A., Briese, C., Pfeifer, N., et al. (2016). Quantification of Overnight Movement of Birch (Betula pendula) Branches and Foliage with Short Interval Terrestrial Laser Scanning. Frontiers in Plant Science, 7, 1-13.
**[12].** Hosoi, F., Nakabayashi, K. and Omasa, K. (2011). 3-D modeling of tomato canopies using a high-resolution portable scanning lidar for extracting structural information. Sensors, 11, 2166-2174.
**[13].** Naito, H., Ogawa, S., Valencia, M.O., Mohri, H., Urano, Y., Hosoi, F., et al. (2017). Estimating rice yield related traits and quantitative trait loci analysis under different nitrogen treatments using a simple tower-based field phenotyping system with modified single-lens reflex cameras. ISPRS Journal of Photogrammetry and Remote Sensing, 125, 50-62.
**[14].** Barmeier, G. and Schmidhalter, U. (2017). High-throughput field phenotyping of leaves, leaf sheaths, culms and ears of spring barley cultivars at anthesis and dough ripeness. Frontiers in Plant Science, 8, 1-16.
**[15].** Wang, X., Zhang, R., Song, W., Han, L., Liu, X., Sun, X., et al. (2019). Dynamic plant height QTL revealed in maize through remote sensing phenotyping using a high-throughput unmanned aerial vehicle (UAV). Scientific Reports, 9, 1-10.

## Claims

1. A method of monitoring the condition of a plant, the method comprising analysing in real-time changes in leaf angle by motion detecting of the leaf or its petiole using a horticulture appliance mounted by an attaching, fastening or affixing means (2) to the leaf or to its petiole, this horticulture appliance further comprising a sensing device (1) which comprises a digital inclinometer and/or inertial measurement unit for defining the orientation of the sensing device and the plant part to which it is attached and comprising a communicator operatively connected to a processor (6), and algorithmically restructuring and visualizing data derived from the sensory system to represent leaf movements in space and time.

2. The method of monitoring the condition of a plant according to claim 1, whereby algorithmically performing sensor data fusion to combine gyroscope data, such as angular velocity, together with accelerometer measurements, such as linear acceleration measurements, to improve accuracy and reduce drift effects.

3. The method of monitoring the condition of a plant according to any one of the previous claims 1 to 2, whereby algorithmically performing the following by the processor 1) timestamping, 2) conversion of the sensed data, 3) sensor and sensor node identification 4) data filtering and interpolation, 5) sensor verification, 6) data concatenation per sensor and 7) data visualisation per sensor.

4. The method according to any one of the claims 1 to 3, with the horticulture appliance comprising an actuator operationally connected to an apparatus that modulates the plant environment.

5. The method according to any one of the claims 1 to 4, whereby the communicator is a low-energy wired or wireless communicator connected with the processor.

6. The method according to any one of the claims 1 to 4, whereby the communicator for handling data transfer comprises a processing unit for pre-processing and visualization of the data.

7. The method according to any one of the claims 1 to 6, whereby the communicator is adapted to integrate the data of one or multiple sensors and to convert it into data packets that can be stored locally or sent wirelessly via protocols such as Wifi, LiFi, Bluetooth, LoRa or LoRaWAN to the processing unit.

8. The method according to any one of the claims 1 to 7, whereby when operational the processor receives data directly from the sensing device (1) via the communicator or through a gateway.

9. The method according to any one of the claims 1 to 8, whereby the attaching, fastening or affixing means comprises a material which is a depressible material securing to the plant, or a closed sleeve surrounding part of the leaf or its petiole, or a notch or groove that fits with a leaf or its petiole, or adapted to secure the sensing device under a leaf or its petiole, or of a material suitable to contact the leaf or its petiole.

10. The method according to any one of the claims 1 to 9, whereby a memory is operatively connected to the sensor to store monitored conditions obtained by the sensor.

11. The method according to any one of the claims 1 to 10, whereby the energy source is an appliance of the group consisting of a battery, a photovoltaic cell, an inductive charger and a long-range wireless charger.

12. The method according to any one of the claims 1 to 11, whereby the processor acts as a data concentrator, storing data locally or on a data server, and is capable of handling preliminary data analysis for visualizing plant movements.

13. The method according to any one of the claims 1 to 12, to analyse in real-time changes in plant morphology.

14. The method according to any one of the claims 1 to 13, to electronically sense the inclination angles alongside one or two axes of the plant part(s) in real-time.

15. The method according to any one of the claims 1 to 14, in which all of the steps of measuring changes in leaf angle, storing the detected condition and transmitting to the processor of the stored condition data, processing these data and activation of an actuator to change the plant's condition or to change the plant's environment are done in real-time.

16. The method according to any one of the claims 1 to 15 for facilitating diagnosis of adverse plant conditions caused by abiotic and biotic stress in a plant or in plants in the same environment, the method comprising determining the severity of abiotic and biotic stress on reference values of a normal or non-stressed condition.

## Patentansprüche

1. Verfahren zum Überwachen der Bedingung einer Pflanze, wobei das Verfahren Analysieren von Änderungen in Echtzeit im Blattwinkel durch Bewegungsdetektion des Blatts oder seines Blattstiels unter Verwendung eines Gartenbaugeräts umfasst, das durch ein Anbringungs-, Befestigungs- oder Fixierungsmittel (2) an dem Blatt oder seinem Blattstiel montiert ist, wobei dieses Gartenbaugerät weiter eine Erfassungsvorrichtung (1) umfasst, die ein digitales Neigungsmessgerät und/oder eine Trägheitsmesseinheit zum Definieren der Ausrichtung der Erfassungsvorrichtung und des Pflanzenteils, an dem es bzw. sie angebracht ist, umfasst und eine Kommunikationseinheit umfasst, die betriebsbereit mit einem Prozessor (6) verbunden ist und Daten, die von dem Erfassungssystem abgeleitet werden, algorithmisch rekonstruiert und visualisiert, um Blattbewegungen in Raum und Zeit darzustellen.

2. Verfahren zum Überwachen der Bedingung einer Pflanze nach Anspruch 1, wobei Sensordatenfusion algorithmisch durchgeführt wird, um Gyroskopdaten, wie Winkelgeschwindigkeit, mit Messungen eines Beschleunigungsmessers, wie lineare Beschleunigungsmessungen, zu kombinieren, um Exaktheit zu verbessern und Drifteffekte zu verringern.

3. Verfahren zum Überwachen der Bedingung einer Pflanze nach einem der vorstehenden Ansprüche 1 bis 2, wobei der Prozessor 1) Zeitstempeln, 2) Umwandlung der erfassten Daten, 3) Sensor- und Sensorknotenidentifizierung, 4) Datenfilterung und - interpolation, 5) Sensorverifizierung, 6) Datenverkettung pro Sensor und 7) Datenvisualisierung pro Sensor algorithmisch durchführt.

4. Verfahren nach einem der Ansprüche 1 bis 3, wobei das Gartenbaugerät einen Aktor umfasst, der betriebsbereit mit einer Einrichtung verbunden ist, die die Pflanzenumgebung moduliert.

5. Verfahren nach einem der Ansprüche 1 bis 4, wobei die Kommunikationseinheit eine verdrahtete oder drahtlose Niederenergie-Kommunikationseinheit ist, die mit dem Prozessor verbunden ist.

6. Verfahren nach einem der Ansprüche 1 bis 4, wobei die Kommunikationseinheit zum Ausführen eines Datentransfers eine Verarbeitungseinheit zum Vorverarbeiten und Visualisieren der Daten umfasst.

7. Verfahren nach einem der Ansprüche 1 bis 6, wobei die Kommunikationseinheit angepasst ist, die Daten eines oder mehrerer Sensoren zu integrieren und sie in Datenpakete umzuwandeln, die lokal gespeichert oder drahtlos über Protokolle wie Wifi, LiFi, Bluetooth, Lora oder LoRaWAN an die Verarbeitungseinheit gesendet werden können.

8. Verfahren nach einem der Ansprüche 1 bis 7, wobei, wenn betriebsbereit, der Prozessor Daten direkt über die Kommunikationseinheit oder durch ein Gateway von der Erfassungsvorrichtung (1) empfängt.

9. Verfahren nach einem der Ansprüche 1 bis 8, wobei das Anbringungs-, Befestigungs- oder Fixierungsmittel ein Material, das ein zusammenpressbares Material ist, das an der Pflanze gesichert ist, oder eine geschlossene Hülse, die Teil des Blatts oder seines Blattstiels umgibt, oder eine Kerbe oder Rille, die zu einem Blatt oder seinem Blattstiel passt, umfasst oder angepasst ist, die Erfassungsvorrichtung unter einem Blatt oder seinem Blattstiel zu sichern, oder aus einem Material ist, das geeignet ist, mit dem Blatt oder seinem Blattstiel in Kontakt zu gelangen.

10. Verfahren nach einem der Ansprüche 1 bis 9, wobei ein Speicher betriebsbereit mit dem Sensor verbunden ist, um überwachte Bedingungen zu speichern, die von dem Sensor erhalten werden.

11. Verfahren nach einem der Ansprüche 1 bis 10, wobei die Energiequelle ein Gerät der Gruppe ist, bestehend aus einer Batterie, einer Photovoltaikzelle, einem induktiven Ladegerät und einem kabellosen Ladegerät mit großer Reichweite.

12. Verfahren nach einem der Ansprüche 1 bis 11, wobei der Prozessor als ein Datenkonzentrator dient, der Daten lokal oder auf einem Datenserver speichert und imstande ist, vorläufige Datenanalyse zum Visualisieren von Pflanzenbewegungen auszuführen.

13. Verfahren nach einem der Ansprüche 1 bis 12 zum Analysieren von Änderungen in Pflanzenmorphologie in Echtzeit.

14. Verfahren nach einem der Ansprüche 1 bis 13 zum elektronischen Erfassen der Neigungswinkel entlang einer oder zwei Achsen des Pflanzenteils (der Pflanzenteile) in Echtzeit.

15. Verfahren nach einem der Ansprüche 1 bis 14, in den alle Schritte zum Messen von Änderungen in Blattwinkel, Speichern der detektierten Bedingung und Übermitteln der gespeicherten Bedingungsdaten an den Prozessor, Verarbeiten dieser Daten und Aktivieren eines Aktors, um Bedingung einer Pflanze zu ändern oder die Umgebung der Pflanze zu ändern, in Echtzeit erfolgen.

16. Verfahren nach einem der Ansprüche 1 bis 15, zum Erleichtern einer Diagnose ungünstiger Bedingungen für die Pflanze, die durch abiotischen und biotischen Stress in einer Pflanze oder in Pflanzen in derselben Umgebung verursacht werden, wobei das Verfahren Bestimmen der Schwere abiotischen und biotischen Stresses anhand von Referenzwerten einer normalen oder nicht-gestressten Bedingung umfasst.

## Revendications

1. Procédé de surveillance de l'état d'une plante, le procédé comprenant l'analyse en temps réel de changements d'angle des feuilles par détection de mouvement de la feuille ou de son pétiole à l'aide d'un appareil horticole monté par un moyen d'attache, de fixation ou d'assujettissement (2) sur la feuille ou son pétiole, cet appareil horticole comprenant en outre un dispositif de détection (1) qui comprend un inclinomètre numérique et/ou une unité de mesure inertielle pour définir l'orientation du dispositif de détection et de la partie de la plante à laquelle il est attaché, et comprenant un communicateur connecté de manière opérationnelle à un processeur (6), et de manière algorithmique la restructuration et la visualisation de données obtenues à partir du système de capteurs pour représenter les mouvements des feuilles dans l'espace et le temps.

2. Procédé de surveillance de l'état d'une plante selon la revendication 1, comprenant de manière algorithmique l'exécution d'une fusion de données de capteurs pour combiner des données gyroscopiques, telles que la vitesse angulaire, à des mesures d'accéléromètre, telles que des mesures d'accélération linéaire, pour améliorer la précision et réduire les effets de dérive.

3. Procédé de surveillance de l'état d'une plante selon l'une quelconque des revendications précédentes 1 à 2, comprenant de manière algorithmique l'exécution de ce qui suit par le processeur : 1) estampillage temporel, 2) conversion des données détectées, 3) identification de capteurs et de nœuds de capteur, 4) filtrage et interpolation des données, 5) vérification de capteurs, 6) concaténation des données par capteur et 7) visualisation des données par capteur.

4. Procédé selon l'une quelconque des revendications 1 à 3, l'appareil horticole comprenant un actionneur connecté de manière opérationnelle à un appareil qui module l'environnement de la plante.

5. Procédé selon l'une quelconque des revendications 1 à 4, de sorte que
le communicateur est un communicateur filaire ou sans fil à faible consommation d'énergie connecté au processeur.

6. Procédé selon l'une quelconque des revendications 1 à 4, de sorte que
le communicateur pour le transfert de données comprend une unité de traitement pour le prétraitement et la visualisation des données.

7. Procédé selon l'une quelconque des revendications 1 à 6, de sorte que
le communicateur est conçu pour intégrer les données d'un ou de plusieurs capteurs et pour les convertir en paquets de données qui peuvent être stockés localement ou envoyés sans fil à l'unité de traitement via des protocoles tels que Wifi, LiFi, Bluetooth, LoRa ou LoRaWAN.

8. Procédé selon l'une quelconque des revendications 1 à 7, de sorte que
lorsqu'il est opérationnel, le processeur reçoit des données directement en provenance du dispositif de détection (1) via le communicateur ou par l'intermédiaire d'une passerelle.

9. Procédé selon l'une quelconque des revendications 1 à 8, de sorte que
le moyen d'attache, de fixation ou d'assujettissement comprend un matériau qui est un matériau dépressible se fixant à la plante, ou un manchon fermé entourant une partie de la feuille ou de son pétiole, ou une encoche ou une rainure qui s'adapte à une feuille ou à son pétiole, ou est conçu pour fixer le dispositif de détection sous une feuille ou son pétiole, ou est d'un matériau conçu pour entrer en contact avec la feuille ou son pétiole.

10. Procédé selon l'une quelconque des revendications 1 à 9, de sorte que
une mémoire est connectée de manière opérationnelle au capteur pour stocker des conditions surveillées obtenues par le capteur.

11. Procédé selon l'une quelconque des revendications 1 à 10, de sorte que
la source d'énergie est un appareil du groupe constitué par une batterie, une cellule photovoltaïque, un chargeur à induction et un chargeur sans fil à longue portée.

12. Procédé selon l'une quelconque des revendications 1 à 11, de sorte que
le processeur agit en tant que concentrateur de données, stockant les données localement ou sur un serveur de données, et est capable de gérer une analyse préliminaire de données pour visualiser les mouvements de la plante.

13. Procédé selon l'une quelconque des revendications 1 à 12, pour analyser en temps réel les changements de morphologie de la plante.

14. Procédé selon l'une quelconque des revendications 1 à 13, pour détecter de façon électronique les angles d'inclinaison le long d'un ou deux axes de parties de la plante en temps réel.

15. Procédé selon l'une quelconque des revendications 1 à 14, dans lequel toutes les étapes de mesure de changements d'angle de la feuille, de stockage de l'état détecté et de transmission au processeur des données d'état stockées, de traitement de ces données et d'activation d'un actionneur pour changer l'état de la plante ou pour changer l'environnement de la plante sont effectuées en temps réel.

16. Procédé selon l'une quelconque des revendications 1 à 15 pour faciliter le diagnostic d'états néfastes de plante causés par des stress abiotiques et biotiques chez une plante ou dans des plantes dans le même environnement, le procédé comprenant la détermination de la gravité de stress abiotique et biotique sur des valeurs de référence d'un état normal ou non stressé.
